# EUROPEAN PATENT SPECIFICATION

(11) **EP 0 834 231 B1**
(45) Date of publication and mention of the grant of the patent: **16.04.2003**
(21) Application number: 96921709.0
(22) Date of filing: 19.06.1996
(51) Int. Cl.: H04N 5/222, G09G 3/34, H04N 5/225, H04N 5/232

(54) **BACK LIT ELECTRONIC VIEWFINDER**
RÜCKWÄRTIG BELEUCHTETER ELEKTRONISCHER SUCHER
VISEUR ELECTRONIQUE ECLAIRE PAR L'ARRIERE

(30) Priority: 20.06.1995 GB 9512551; 17.08.1995 GB 9516888
(43) Date of publication of application: 08.04.1998
(73) Proprietor: THOMSON CONSUMER ELECTRONICS, INC., Indianapolis, IN 46290-1024 (US)
(72) Inventor: STEVENS, John, Herbert, Martinsville, IN 46151 (US); DAVENPORT, Francis, Arthur, Haddenfield, NJ 08035 (US)
(74) Representative: Rossmanith, Manfred, Dr.
(86) International application number: US9610626
(87) International publication number: WO97001240

(56) References cited:
- US-A- 4 752 771
- US-A- 4 760 389
- US-A- 4 945 424
- US-A- 4 997 263
- US-A- 5 132 825
- PATENT ABSTRACTS OF JAPAN vol. 009, no. 076 (P-346), 5 April 1985 (1985-04-05) & JP 59 208528 A (SUWA SEIKOSHA KK), 26 November 1984 (1984-11-26)
- PATENT ABSTRACTS OF JAPAN vol. 017, no. 036 (P-1474), 22 January 1993 (1993-01-22) & JP 04 254820 A (FUJITSU LTD), 10 September 1992 (1992-09-10)
- PATENT ABSTRACTS OF JAPAN vol. 018, no. 137 (E-1518), 7 March 1994 (1994-03-07) & JP 05 316528 A (STANLEY ELECTRIC CO LTD), 26 November 1993 (1993-11-26)
- PATENT ABSTRACTS OF JAPAN vol. 015, no. 099 (P-1177), 11 March 1991 (1991-03-11) & JP 02 309316 A (NEC CORP), 25 December 1990 (1990-12-25)
- PATENT ABSTRACTS OF JAPAN vol. 013, no. 554 (P-973), 11 December 1989 (1989-12-11) & JP 01 230089 A (CASIO COMPUT CO LTD), 13 September 1989 (1989-09-13)

## Description

This invention is directed to the field of portable electronic recording cameras and in particular to reducing power consumption in an electronic viewfinder with a liquid crystal display, by optimizing illumination of the display.

### BACKGROUND OF THE INVENTION

Video recording cameras, or camcorders, typically employ a zoom lens coupled to a solid state imager. The imager generates an image signal which is processed to provide a video signal for television viewing or recording. The video signal may be viewed on a viewfinder, at least during recording, to assist in properly aiming the camera and composing the video program. For a monochrome display, the viewfinder can comprise, for example, a cathode ray tube or a liquid crystal display for generating an image to be monitored by the user. In a color display viewfinder, a liquid crystal display is typically used, because color miniature cathode ray tube displays are unduly complicated and expensive by comparison. Cathode ray tubes provide an active source of light due to light emission from their phosphors. A liquid crystal display, however, is a passive device and requires illumination to make the image visible.

US-A 5 132 825 discloses an LCD viewfinder that can be illuminated selectively by external light and an internal light source supplying light of different color temperatures. An LCD driver circuit drives the LCD display in accordance with the optimum color temperature so as to provide the image having an optimum hue required for the monitor.

From JP-A 59 20 8528 a display panel is known, which uses both ambient light and the light of an internal light source for back lighting purposes. By means of a photo detector the internal light source is adjusted in dependence of the intensity of the ambient light such that the total light intensity remains constant.

In JP-A 53 16 528 an electronic viewfinder for a camera is described. In the known viewfinder a light source is used for back lighting the display. The color temperature of the light source is controlled.

A microprocessor control system can control various video processing parameters, operation of the lens servo control motors, and the recording media transport. The recording section may utilize a magnetic tape recording medium, magnetic disk, solid state memory or other media. The camera and recorder and all their parts are preferably battery powered for mobility, often by a rechargeable battery, for example, having a nickel cadmium structure. Many camcorders can function as a recording camera, or as a video cassette recorder play back device. Battery power consumption is greatest when recording, and increases with the frequency of zoom lens operation due to power consumption by the lens servo motors.

It is desirable that camcorder power consumption be minimized. A reduction in power consumption increases the operating time available with a specific battery size, type and/or charge condition. A reduction in power consumption could allow the use of physically smaller and lighter batteries, or permit operation, for example, with less expensive non-rechargeable batteries such as alkaline cells.

Electronic circuit changes may offer some opportunities for power reduction. However, the major power dissipation loads are the head drum and capstan motors, and the electronic viewfinder. A typical monochrome viewfinder with a cathode ray tube display may consume approximately 800 milliwatts. A typical color viewfinder with a liquid crystal display, or LCD, typically consumes 1200 milliwatts. Approximately 50% of the power consumed by the typical color LCD viewfinder display is dissipated by the lighting device, which provides a source of illumination.

Typically, the lighting device comprises an illuminated panel that back lights the LCD display over its area. Individual picture elements of the LCD display turn off or on to pass or block an incremental area of light in one of the primary colors, together displaying the image. It would be advantageous to maximize efficiency in the use of this powered backlighting, as well as to reduce or eliminate unnecessary use of powered backlighting, for example if ambient light is available for illumination. It would further be advantageous to maximize the efficiency of use of ambient light, which can be incident from various angles and can vary widely in intensity and color distribution, while maintaining substantially the nominal operation of the viewfinder.

### SUMMARY OF THE INVENTION

A camera such as a video camcorder includes a viewfinder display with a liquid crystal display coupled to the camera for receiving image information. A means for receiving ambient illumination directs light onto the liquid crystal display, preferably as backlighting, to display the image information by variation in operation of picture elements disposed in an array on the display. A source of illumination also directs light onto the liquid crystal display to augment the received ambient light when necessary. Means are coupled to the source for independently controlling the intensity and colour balance of the source in the event of a variation in received ambient illumination. This control of the intensity of the source can be accomplished as a function of one or more of a sensed level of the received ambient illumination, a sensed intensity of illumination passing through the liquid crystal display (i.e., the display intensity), a color attribute of the received ambient illumination or light or of the display output, and controls.

The control means coupled to the illumination source controls the intensity thereof to maintain the luminous intensity of the camera image according to predetermined criteria, e.g., to keep the intensity substantially constant. According to another inventive aspect, the control means can control the extent to which ambient illumination is coupled to the liquid crystal display, namely by blocking a portion of the available ambient illumination if the illumination is brighter than necessary. In still a further inventive arrangement, the control means is responsive to means for sensing color balance in one or more of the light incident on the camera, the image information signal produced by the camera, and the image produced by the liquid crystal viewfinder display. An color augmentation illumination source having a controllable color temperature, or a plurality of proportionately controllable colored augmentation sources, are coupled to the control means and maintain a predetermined color temperature or color balance in the image produced by the viewfinder display.

### BRIEF DESCRIPTION OF THE DRAWING

FIGURE 1 is a block diagram of a video recording camera employing several inventive arrangements.
FIGURE 2 is a diagrammatic side view of a liquid crystal display viewfinder employing an inventive back lighting arrangement.
FIGURE 3 illustrates an advantageous configuration of a viewfinder display, as viewed through the eyepiece of the inventive viewfinder of FIGURE 2.
FIGURE 4 depicts a simplified block diagram of an embodiment of an inventive back lighting arrangement.
FIGURE 5 depicts a simplified block diagram of a further embodiment of an inventive back lighting arrangement.
FIGURE 6 illustrates an inventive viewfinder with a direct view screen employing certain advantageous display positions and controls.
FIGURE 7 depicts a simplified block diagram of an inventive back lighting arrangement for a directly viewed type of liquid crystal display.
FIGURE 8 depicts a simplified block diagram of a further inventive back lighting arrangement.
FIGURE 9 depicts a simplified block diagram of another inventive back lighting arrangement.

### DETAILED DESCRIPTION

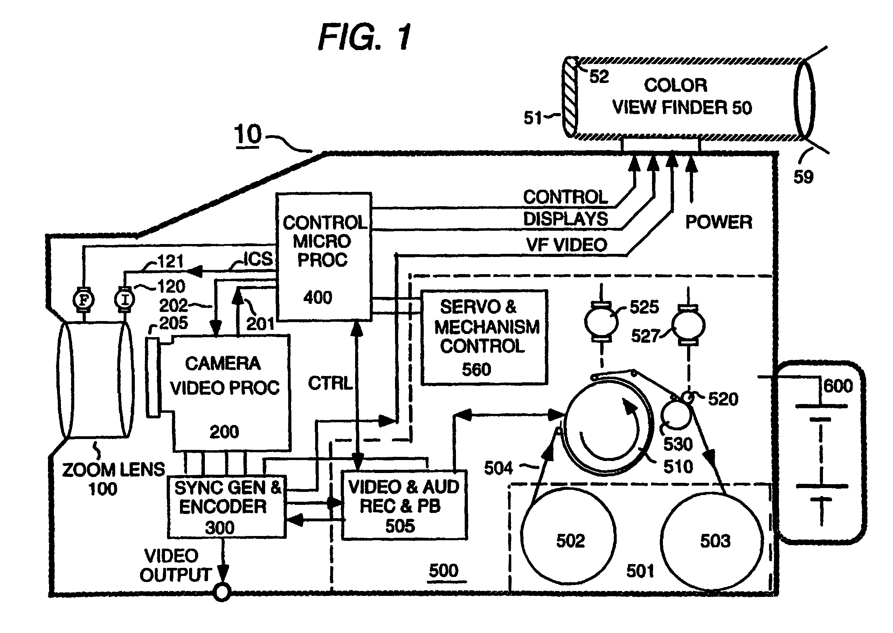

FIGURE 1 depicts a video recording camera or camcorder and its major functional blocks. A zoom lens 100 gathers scene illumination and focuses an image on an imaging device 205. The zoom lens may include a controllable iris diaphragm 120 for adjusting the f-stop of the lens and thereby controlling the intensity of illumination of the focused image. The zoom lens also has controllable mechanical or preferably electromechanical zoom and focusing mechanisms, shown generally as element F.

Imaging device 205 may be, for example, a charge coupled device or CCD array of discrete light collecting semiconductor elements, coupled to a camera video processor 200 for converting the variations in illumination across the image into a video signal suitable for recording. The imaging device 205 and camera video processor 200 preferably are color units and together process red, green and blue illumination components to form the video signal. Processor 200 preferably stabilizes black and white levels in the signal, automatically controls white balance, and gamma corrects the generated video signal such that it can be recorded, displayed and played back for display, for example on a CRT or other display.

In the embodiment shown, a control microprocessor 400 is coupled bidirectionally to the camera video processor and also controls the zoom lens iris and focusing mechanisms. Automatic enhancement of picture sharpness and other functions are provided by control microprocessor 400, which can automatically vary the iris for proper light level, focus for sharpness, zoom for maintaining a particular image aspect and the like, such automatic functions being selectable by the user via switch inputs (not shown).

Microprocessor 400 provides control signals that determine the functional modes of the various blocks of the complete camcorder. Thus, microprocessor 400 is coupled to a servo and mechanism controller 560 which provides specific control of the recorder mechanism and its motors 525, 527 and other actuators. Microprocessor 400 is coupled to the camera video processor 200 and receives image representative signals via connection 201. The image representative signals may be digitized if necessary to facilitate computation and generation of various output control signals. For example, signal 202 coupled to camera video processor 200 can be included to control individual or combined gain control of red, green and blue image signal levels in order to maintain a white balance, for example using as a reference the least colored area found in the image scene, or a reference area selectable under user control. This control signal 202 may be considered indicative of the color temperature of the incident illumination of the image scene. For example, with a lower or cooler color temperature illumination the scene tends towards red, a higher or hotter color temperature tends to produce a bluer scene rendition. Thus control signal 202 provides a means by which the color temperature can be normalized and a substantially color free white rendition achieved.

Microprocessor 400 generates a signal 121 which is coupled to control iris motor 120 for increasing or decreasing the size of the optical aperture or iris to regulate the amount of light focused on imager 205. A closed feedback control loop may be formed in that the microprocessor can determine the luminance level or amplitude of the video signal at least at a reference area of the imaged scene, and can vary the iris opening to increase or decrease the amount of light collected and thereby maintain the image video amplitude at a predetermined value. Thus, both the video signal and iris control signal 121 are representative of the intensity of the illumination incident on imager 205. This illumination level incident on the camcorder lens, is also indicative of the illumination level incident on the viewfinder.

Microprocessor 400 preferably is coupled to user control inputs for setting operational modes, and can generate status and warning display messages based upon the user inputs and/or indicating the modes of operation being effected by microprocessor 400 or detected by signals coupled to microprocessor 400. Such status and warning messages are coupled by suitable connections for display by viewfinder 50. In addition to indications of recording and playback modes, messages can be generated to indicate inadequate incident light (i.e., less than a predetermined threshold), a discharged condition of batteries 600 or the like.

Processed video signals from camera processor 200 are coupled to encoder 300, which produces a standard color signal for television viewing, for example, in PAL or NTSC video color signal format. In addition, at least one video signal is advantageously generated and coupled to viewfinder 50 for display to the operator, preferably together with status indicators and warnings as discussed in more detail below. Luminance and color signals likewise are generated for recording on a media by video/audio record/play amplifier 505, which is coupled to heads located on head drum 510.

The depicted recorder 500 is a magnetic tape recorder, utilizing a rotating record and replay head assembly or drum 510, driven by motor 527, and capstan 520 with pinch roller 530 driven by motor 525. The capstan and pinch roller advance the recording medium. Recorder 500 is shown loaded and threaded with tape 504 withdrawn from tape cassette 501 and threaded around the periphery of head drum 510 to facilitate either recording or playback.

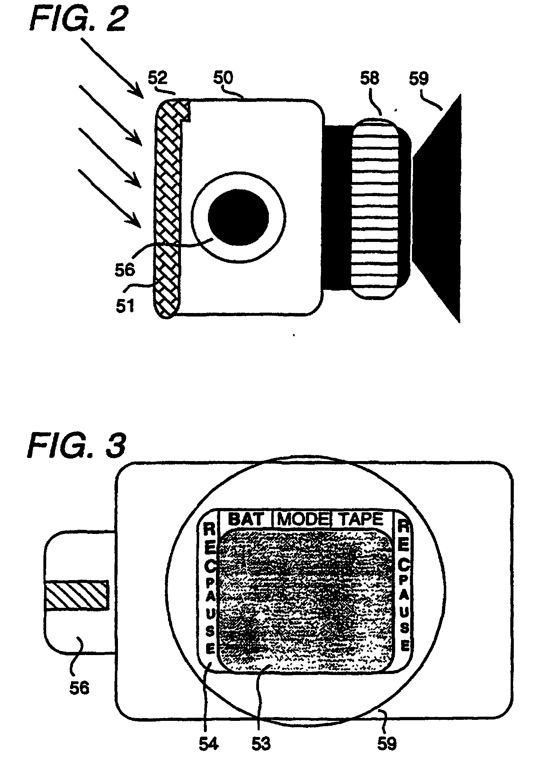

FIGURE 1 shows color viewfinder 50 generally, namely including an eye cup 59 on one end, through which the user views an image that is presented adjacent to windows 51, 52 at an opposite end, preferably but not necessarily viewing in the same direction that the camera is pointing. FIGURE 2 illustrates a color LCD view finder 50, employing an inventive back lighting arrangement, the same reference numbers being used throughout the drawings to illustrate comparable elements. FIGURE 3 illustrates the view with respect to the operator, namely from the right in FIGURE 2.

The viewfinder may be attached to the camcorder body at a mounting point 56 which may provide for electrical interconnections through the mounting point, for example by clearance for signal conductors or by connectors. A color image display is formed which may be viewed via an eye piece optical adjustment 58 and flexible cup or shield 59. The display is provided by a color liquid crystal panel with backlighting and control having several inventive aspects.

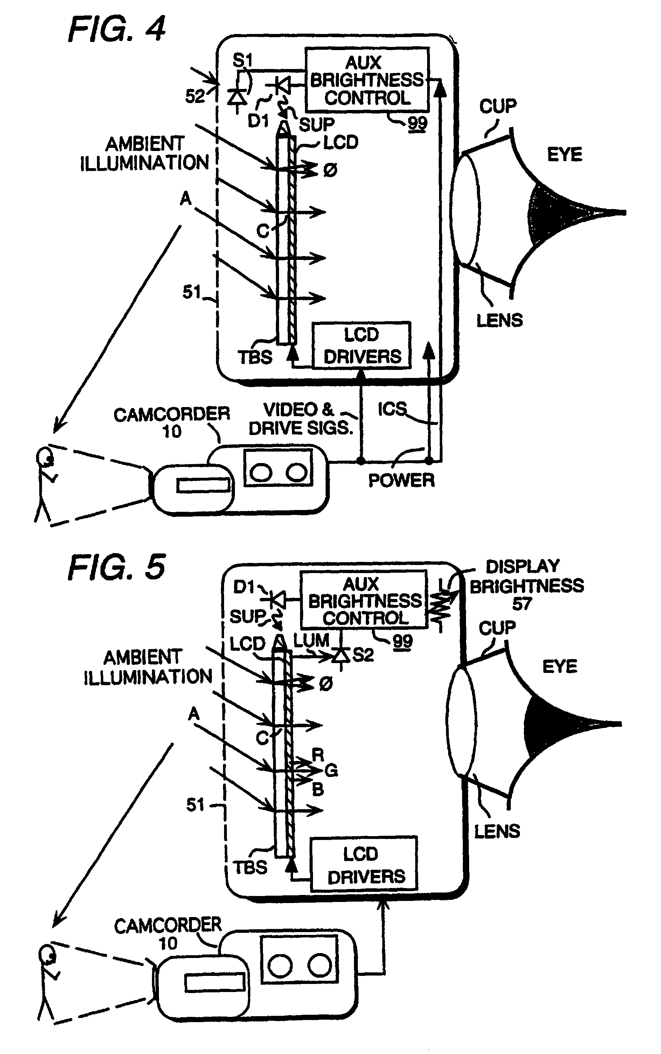

The structure and operation of a liquid crystal display is well known. In simple terms, a liquid crystal display functions as an electrically controlled optical attenuator with discrete addressable zones defining picture elements (pixels). An instantaneous video amplitude value for each of the image pixels determines the luminous intensity transmitted through each LCD cell. The LCD may be lit by a light source positioned on the opposite side of the LCD from the viewer. Typical LCD viewfinder displays employ a cold cathode fluorescent tube or CCFT, as a source of back side illumination. Such a light source requires a high voltage supply and may represent between 30% to 60% of the viewfinder power consumption. Viewfinder 50 advantageous employs ambient illumination incident on window surfaces 51 and 52 to provide back lighting. The coupling of the incident ambient illumination is explained with reference to FIGURES 4, 5, 8 and 9.

FIGURE 3 illustrates the inventive color LCD viewfinder of FIGURE 2, viewed via flexible cup 59 and adjustable eye piece 58. A display image advantageously comprises a video display area 53, and one or more status or warning display areas 54. Areas 53 and 54 may form part of a single LCD device having multiple discretely addressable display areas. For example, video display area 53 is capable of displaying a video image derived signal. The status or warning display areas 54, may be capable of area illumination or occlusion of predetermined words of symbols displayed in positive or negative fashion on a background. These display areas may, in addition to occlusion or illumination, also provide for color changes as indicia of status change or warning conditions, for example using red for warnings, or orange versus red to distinguish warnings of different criticality.

Display areas 53 and 54 may be constructed from multiple liquid crystal displays, for example with video displayed on area 53 and the status or warning display areas 54 being formed by a plurality of individual LCDs, which can be of reduced resolution compared with that of display 53. The LCD display areas 53 and 54 may be advantageously illuminated by a common source of back lighting. For example the LCD display areas may be illuminated by a transparent backlighting substrate (TBS) with ambient illumination, a TBS with augmented ambient illumination, a CCFT, a TBS with feedback controlled and/or color compensated ambient illumination capable of adding or reducing from ambient illumination levels, or a solid state illuminator.

FIGURE 4 is a simplified block diagram showing a first embodiment of an inventive back lighting arrangement. The block diagram illustrates ambient illumination 'A' incident on window 51 located in the backside of the viewfinder. The incident illumination is collected by a transparent back lighting substrate or TBS which collimates the illumination so as to direct light substantially normal to the plane of the display over the area of the LCD that is elongated in length and width (shown edgewise), to provide a luminous surface backlighting the LCD.

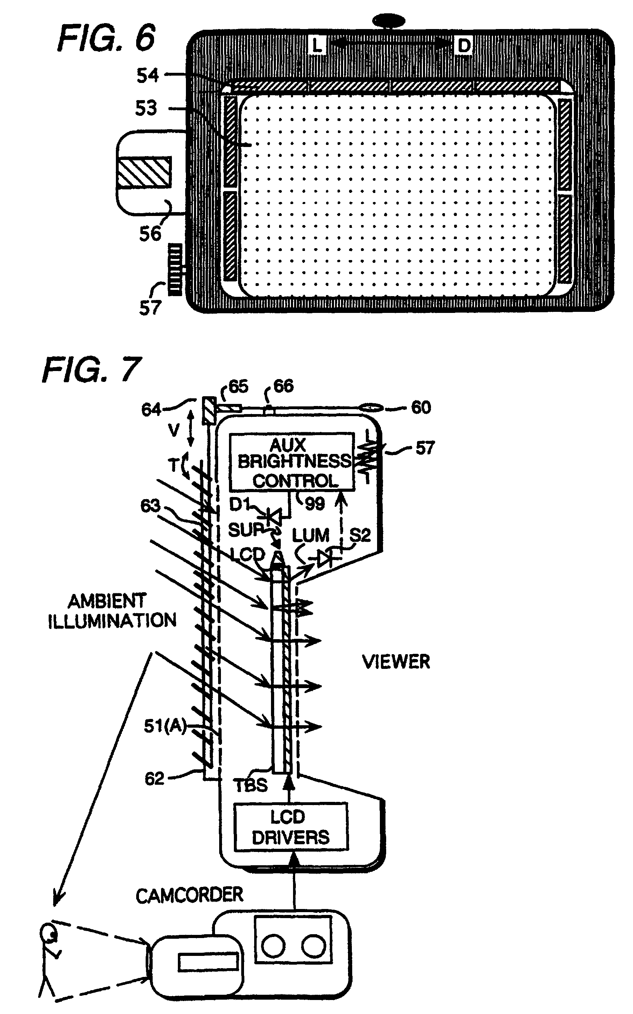

The collimation provided by the TBS can be determined, for example, by the geometry of its surfaces, and may be adjusted during manufacture to impart a divergence angle Ø to the light output such that all points on the screen are illuminated from the perspective of the user. In the viewfinder illustrated in FIGURES 2 and 3, the line of sight is essentially orthogonal to the display surface and there is little requirement for any significant viewing angle in this example. Therefore, the vertical and horizontal divergent angles can be small and a large proportion of the ambient illumination energy is usefully applied. Thus the single eyepiece viewfinder, illustrated in FIGURES 2 and 3, with a transparent backlighting substrate can improve energy efficiency, display brightness, and/or provide a reduction in the power dissipation needed to illuminate the viewfinder display. An alternative side-mounted pivoting viewfinder is illustrated in FIGURES 6 and 7. This type of viewfinder may be viewed over a range of viewing angles, and hence during manufacture the collimation provided by the transparent back lighting substrate may be adjusted for more divergence and to provide a predetermined field of view. The increased viewing angle produces a consequential reduction in display intensity.

Various types of flat collimators can for used as transparent backlighting substrates. One type of collimator has a plurality of facets or ridges that act as refracting prisms to redirect light that is incident over a range of angles to less divergent beams directed toward the viewing eye. Such a collimator is available, for example, from Clio Technologies, Inc. t/a BriteView Technologies, 1810 Eber Road, Unit C, Holland, Ohio 43528.

In FIGURE 4, collimated light C from the TBS is coupled directly to the color liquid crystal display LCD, the operation of which is well known and previously described. The color LCD produces three color images, red, green and blue, which when viewed appear essentially superimposed one upon the other.

Use of collimated ambient illumination backlighting for an LCD plainly offers savings in terms of power dissipation. However, ambient illumination is variable and at times the ambient light level is insufficient for one or both of the camera imager and the display to capture and visibly reproduce an image. The camera imaging system is usually equipped with means for offsetting the effects of varying illumination. For example, the electronic gain in each of the camera video processing channels R, G, and B may be varied to maintain a nominally constant video amplitude and hence a viewable and recordable image. The lens may contain a servo controlled iris diaphragm which is adjusted to obtain an approximately constant video amplitude. Such electrical and optical adjustments are not available in connection with the viewfinder. Thus to compensate for ambient illumination variation in the viewfinder an inventive powered augmentation light source is provided, which, for example, may comprise a light emitting diode or a cold cathode fluorescent tube arranged to supplement ambient illumination.

FIGURE 4 illustrates a first control method where ambient illumination is coupled via window 52 to a light sensor S1, for example a photo diode placed so as to sense the ambient light level. Sensor S1 is coupled to an auxiliary brightness controller which may comprise a comparator and a controllable source of electric power for coupling to the augmentation light source. The sensor signal is coupled to the comparator and compared against a predetermined voltage value. The comparator output signal is applied to control the power source which may, for example, employ pulse width modulation and switching means for setting a desired average brightness of the augmentation light source. A reduction in ambient illumination produces a corresponding change in output signal from sensor S1. At a predetermined level of ambient illumination, the sensor output signal causes a change of state in the output of the comparator, initiating power coupling to the augmentation light source. As ambient illumination of the LCD progressively falls, power to the light source is progressively increased, thus augmenting the display brightness as needed to maintain the brightness of the viewfinder display.

The augmentation light source can be coupled to an edge of the transparent back lighting substrate of the type having collimating facets or ridges as discussed above and available from Clio Technologies, Inc. t/a BriteView Technologies. The edge coupling is designed to produce a luminous surface, with light collimated in both horizontal and vertical directions. Internal reflections of the relatively thin TBS panel distribute the edge lighting throughout the panel material, the light impinging on the respective prismatic ridges and being directed efficiently toward the viewing eye.

FIGURE 5 illustrates a further control method where ambient illumination is coupled via window 51 and the liquid crystal display to a sensor S2, for example, a photo diode. According to this embodiment the light sensor is responsive to the light emitted by the display, to which both ambient light and auxiliary illumination may contribute. Sensor S2 is coupled to an auxiliary brightness controller which may comprise circuitry similar to that of FIGURE 4. In this embodiment, the sensor signal is coupled to a comparator as described above, but is compared against a user determined voltage value set by means of display brightness control 57. Hence the user can control the brightness of the display to a desired brightness. A closed control loop is formed by the sensor, power controller, supplementary light source and the LCD. Sensor S2 senses the luminous intensity transmitted through the LCD resulting from the combination of ambient illumination and the supplementary light source. Sensor S2 can be positioned at an area of the LCD which is maintained in a fully transmissive condition and is independent of variations in the display video intensity. For example, the sensor may measure an electronically generated "white" block which may be added to the display video signal to occupy an unobtrusive display position, or a position that is masked or otherwise outside of the portion of the display seen by the viewer. Alternatively the sensor may sense a fully transmissive area of a status or warning LCD which is illuminated by the combined illumination source. The LCD illumination control loop maintains the user determined display brightness as ambient illumination varies. Increasing ambient illumination may also be compensated by progressively decreasing the augmenting light source power. However, when the light source is extinguished, display brightness regulation ceases.

FIGURES 6 and 7 illustrate a further color LCD viewfinder advantageously back lit with ambient and augmentation illumination. Screen 53 provides direct viewing capability of the camera video display signal. Located at the periphery of video display screen 53 are status and warning displays 54 which are advantageously illuminated by the ambient and augmentation illumination. The color LCD viewfinder also includes a manual control 60 for varying the intensity of the ambient illumination incident on the viewfinder back light window 51(A). As described for FIGURE 5, the closed loop control of the augmentation illumination source has limited ability to compensate for increases in ambient illumination levels, for example, moving from shade to full sunlight. Hence various methods may be employed to provide further control of the LCD brightness.

FIGURE 7 illustrates a simplified mechanical shutter arrangement 60 - 66, which provides a means to manually adjust the display intensity by controllably admitting or blocking ambient light. Shutter blades 61 are pivotally mounted on support 62 and are each coupled to a control rod 63 which is movable vertically as indicated by arrow V. Such vertical movement causes the shutter blade to rotate about their pivot axes as indicated by arrow T. Control rod 63 may be moved vertically by a helical worm gear 64 attached thereto, which is meshed with a similar gear 65 formed as a quadrant part of lever 60. Lever 60 is pivotally mounted on support 66. Hence lateral movement of lever 60, as indicated in FIGURE 6, results in the rotation and vertical motion of rod 63 which in turn tilts the shutter blades and controls the intensity of incident ambient illumination. Such a shutter structure also may be constructed within the viewfinder body as opposed to on its outer surface. FIGURE 7 also illustrates the closed loop control of the augmentation illumination source as described for FIGURE 5.

A further method of ambient illumination control may utilize neutral density filters which are interposed in the ambient illumination path to provide a reduction in illumination intensity. Such neutral density filters may be arranged in the form of segments of a wheel which may be rotated to select an appropriate reduction in illumination. The neutral density filters may also be arranged in the form of shutters with are drawn across the back illumination window 51, 51(A). For example, the neutral density filters may be selected manually by the user or may be automatically selected by an actuating means responsive to a sensed high level of incident illumination. Such automated sensing may be coupled to the lens iris control signal ICS, or may be generated within the viewfinder a further sensor coupled to a controller and functioning similarly to that of the auxiliary brightness controller.

Other methods may also be employed to provide control of excess ambient illumination, for example, windows 51 and 51(A) may be fabricated from a photo chromic material having optical transmission properties which may vary in response to the intensity of incident illumination. Such photo chromic materials may provide a variation of between one and two "f" stops or between 6 to 12 decibels of incident illumination control. The illumination level can also be controlled using polarized filters and means to rotate the polarized filters relative to one another to pass or block light depending on the extent to which the filters are aligned.

A further method of ambient illumination control may utilize the lens iris control signal ICS. As discussed previously, the lens iris may be controlled to maintain a substantially constant video signal amplitude. Thus the iris control signal is indicative of incident illumination levels and may be utilized to provide a similar light control function for a viewfinder lit by ambient illumination. An iris mechanism and control motor could be incorporated into the viewfinder, but such a control method may offset the cost and power savings gained from the use of ambient back lighting instead of powered backlighting. Since the iris control signal is indicative of incident illumination levels, signal ICS may be used as an input or feedback signal for use in controlling the augmentation light source. In FIGURE 4, for example, sensor S1 may be removed and the iris control signal ICS substituted to provide for controlled correction of LCD intensity.

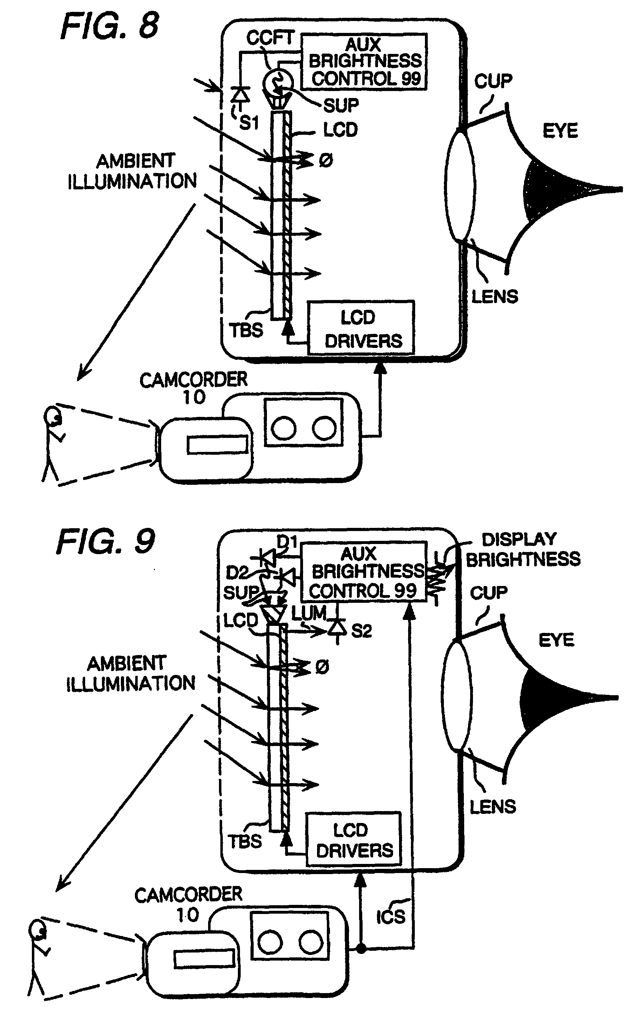

FIGURE 8 illustrates a further augmentation light source provided by a cold cathode fluorescent tube CCFT. The auxiliary brightness control circuitry functions as described previously for FIGURE 4. Falling ambient illumination levels produce a corresponding change in the output of sensor S1, which results in illumination of the cold cathode fluorescent tube CCFT by the auxiliary brightness control. The CCFT may not be controllable in intensity except for turning on or off, hence the augmentation illumination provided by the CCFT may be balanced by controlled attenuation of the ambient illumination for example as discussed previously.

FIGURE 9 illustrates a further method for the augmentation of an ambient illumination light source. In FIGURE 9 an exemplary augmentation light source is shown having two light emitting diodes D1, D2, which may be coupled to the transparent back lighting substrate TBS. The two LEDs D1, D2, may generate illumination having different wavelengths, for example red and green or yellow or blue. The LEDs may be advantageously energized individually to provide an augmentation illumination having a controllable color temperature. For example, during daylight the color temperature of the ambient back light may be high, having a predominantly blue whiteness. The use of red augmentation light will thus tend to compensate for any erroneous coloration of the viewfinder image display. The camera preferably automatically maintains a balanced, color free white, thus such a control signal may be advantageously coupled to additionally control the intensity of a red LED to achieve the required balance. In the evening, for example, the color temperature of ambient backlighting is reduced, progressively becoming more red, hence the use of a green, yellow or blue augmentation light source can compensate for erroneous coloration of the viewfinder image display due to ambient backlighting. Thus the auto white balance signal, or signals which provide a color balanced imager video signal, may be coupled to the viewfinder to advantageously provide color temperature control which may be employed in addition to the display intensity methods already discussed.

## Claims

1. A viewfinder (50) for a camera (10), comprising:
a liquid crystal display (LCD) for receiving image information to be displayed by the viewfinder (50);
means for receiving ambient illumination (A) coupled to back light said liquid crystal display (LCD) to display said image information, the ambient illumination having a variable level;
a source of illumination (D1, D2) coupled to said liquid crystal display (LCD); and,
control means (99) coupled to said source of illumination (D1, D2) the control means (99) independently varying the intensity and color balance of the source (D1, D2) in the event of a variation of ambient illumination.

2. The viewfinder of claim 1, wherein the means for receiving ambient illumination (A) comprises shutter means to vary intensity of the ambient light coupled to said liquid crystal display.

3. The viewfinder of claim 1, wherein said source of illumination (D1, D2) comprises a light emitting diode.

4. The viewfinder of claim 1, wherein said source of illumination comprises a cold cathode fluorescent tube (CCFT).

5. The viewfinder of claim 1, further comprising a collimating means (TBS) operable to collimate illumination from said means for receiving ambient illumination, the collimating means (TBS) coupling the illumination to said liquid crystal display (LCD), whereby collimated light is directed along a viewing direction.

6. The viewfinder of claim 5, wherein said collimating means (TBS) is operable to collimate illumination (SUP) from the source (D1, D2), whereby collimated light from the source (D1, D2) is directed along said viewing direction.

7. The viewfinder of claim 1, further comprising an illumination sensing means (S1, S2, 200), coupled to controlling means (99), for sensing at least one of illumination emitted by said display of image information and illumination from said means for receiving ambient illumination incident on said liquid crystal display.

8. The viewfinder of claim 7, wherein said illumination sensing means (S1, S2, 200) is responsive to luminous intensity and color temperature.

9. The viewfinder of claim 8, wherein said controlling means (99) is coupled to vary the source (D1, D2) of illumination for maintaining a predetermined illumination level emitted by said display.

10. The viewfinder of claim 9, wherein the illumination sensing means (S1, S2, 200) is responsive to a color temperature, and wherein the controlling means (99) is operable to vary a color temperature of the illumination (LUM) emitted by said display (LCD) by augmenting at least one color level in the source (D1, D2) of illumination.

11. The viewfinder of claim 10, further comprising an image collection means (205) operable to collect color information regarding a scene, and wherein the illumination sensing means comprises (200) said image collection means (205).

12. The viewfinder of claim 1, wherein said means for receiving ambient illumination (A) further comprises controllable means (62, 63) for attenuating the ambient illumination for maintaining the substantially stable display of said image information.

13. The viewfinder of claim 1, wherein said image information further comprises at least one controllable camera operational status message (54) disposed adjacent to an edge of a field of the display (53), the field showing an image being collected by the camera.

14. The viewfinder of claim 1, wherein said image information further comprises at least one controllable camera operational status message display (54) disposed adjacent to an edge of said liquid crystal display (53), said message display being coupled for illumination by said source of illumination and said means for receiving ambient illumination.

15. The viewfinder of claim 13, wherein said camera operational status message indicates at least one of power supply capacity, exposure time and duration of recording.

16. The viewfinder (50) of claim 1, wherein the source of illumination of the liquid crystal display includes a supplemental light source (D1, D2) coupled to a controller (99) responsive to a sensor (S2) operable to sense a luminous intensity in at least one color, of one of the illumination incident on the liquid crystal display and light (LUM) emitted by the liquid crystal display as illuminated.

17. The viewfinder (50) of claim 1, wherein the source of illumination of the liquid crystal display includes a supplemental light source (D1, D2) coupled to a controller (99) responsive to an image collection circuit (200,205) of the video camera recorder (10), the image collection circuit (200, 205) sensing intensity of illumination of at least a portion of a scene in at least one color, and the controller (99) operating the supplemental light source (D1, D2) for maintaining an intensity and a color of the liquid crystal display during variations of scene illumination.

18. The viewfinder (50) of claim 1, further comprising at least one sensor (S1, S2) responsive to a luminous intensity and a color balance of at least one of said ambient illumination (A) and light (LUM) emitted from the display, the sensor (S1, S2) being coupled to the means (99) coupled to said controllable source of illumination (D1, D2) for varying said intensity (LUM), and being'operable to control the controllable source (D1, D2) for maintaining a predetermined luminous intensity and a predetermined color balance of the light emitted from the display.

19. The viewfinder (50) of claim 18, wherein said means for sensing (S2) said luminous intensity is coupled to a predetermined area of said liquid crystal display (53).

20. The viewfinder (50) of claim 1, wherein said control means (99) coupled to said source (D1, D2) of illumination further comprises a controllable attenuator (62, 63) for reducing a luminous intensity of the ambient light (A) coupled to said liquid crystal display.

## Patentansprüche

1. Sucher (50) für eine Kamera (10), umfassend:
eine Flüssigkristallanzeige (LCD) zum Empfangen von Bildinformationen, die durch den Sucher (50) angezeigt werden sollen;
Mittel zum Empfangen von Umgebungslicht (A), die mit der Flüssigkristallanzeige (LCD) verbunden sind, um diese von hinten zu beleuchten, um die Bildinformationen anzuzeigen, wobei das Umgebungslicht ein variables Niveau aufweist;
eine Beleuchtungsquelle (D1, D2), die mit der Flüssigkristallanzeige (LCD) verbunden ist; und
Steuerungsmittel (99), die mit der Beleuchtungsquelle (D1, D2) verbunden sind, wobei die Steuerungsmittel (99) die Intensität und den Farbabgleich der Quelle (D1, D2) in dem Fall einer Veränderung des Umgebungslichtes davon unabhängig verändern.

2. Sucher nach Anspruch 1, wobei die Mittel zum Empfangen von Umgebungslicht (A) Verschlussmittel umfassen, um die Intensität des Umgebungslichtes zu verändern, die mit der Flüssigkristallanzeige verbunden ist.

3. Sucher nach Anspruch 1, wobei die Beleuchtungsquelle (D1, D2) eine lichtemittierende Diode umfasst.

4. Sucher nach Anspruch 1, wobei die Beleuchtungsquelle eine Kaltkathodenleuchtstoffröhre (CCFT) umfasst.

5. Sucher nach Anspruch 1, weiterhin Kollimationsmittel (TBS) umfassend, die die Beleuchtung von den Mitteln zum Empfangen von Umgebungslicht ausrichten können, wobei die Kollimationsmittel (TBS) die Beleuchtung mit der Flüssigkristallanzeige (LCD) verbinden, wobei Parallellicht entlang einer Blickrichtung gelenkt wird.

6. Sucher nach Anspruch 5, wobei die Kollimationsmittel (TBS) die Beleuchtung (SUP) von der Quelle (D1, D2) ausrichten können, wobei Parallellicht von der Quelle (D1, D2) entlang der Blickrichtung gelenkt wird.

7. Sucher nach Anspruch 1, weiterhin Beleuchtungserfassungsmittel (S1, S2, 200) umfassend, die zum Erfassen von mindestens der Beleuchtung, die durch die Bildinformationenanzeige ermittiert wird, oder der Beleuchtung von den Mitteln zum Empfangen von Umgebungslichteinfall auf der Flüssigkristallanzeige mit den Steuerungsmitteln (99) verbunden sind.

8. Sucher nach Anspruch 7, wobei die Beleuchtungserfassungsmittel (S1, S2, 200) auf Lichtintensität und Farbtemperatur ansprechen.

9. Sucher nach Anspruch 8, wobei die Steuerungsmittel (99) verbunden sind, um die Beleuchtungsquelle (D1, D2) zum Aufrechterhalten eines vorbestimmten Beleuchtungsniveaus zu verändern, das durch die Anzeige emittiert wird.

10. Sucher nach Anspruch 9, wobei die Beleuchtungserfassungsmittel (S1, S2, 200) auf eine Farbtemperatur ansprechen und wobei die Steuerungsmittel (99) eine Farbtemperatur der von der Anzeige (LCD) emittierten Beleuchtung (LUM) verändern können, indem mindestens eine Farbstufe der Beleuchtungsquelle (D1, D2) verstärkt wird.

11. Sucher nach Anspruch 10, weiterhin Bildeinfangmittei (205) umfassend, die Farbinformationen bezüglich einer Szene einfangen können, wobei die Beleuchtungserfassungsmittel (200) die Bildeinfangmittel (205) umfassen.

12. Sucher nach Anspruch 1, wobei die Mittel zum Empfangen von Umgebungslicht (A) weiterhin steuerbare Mittel (62, 63) zum Abschwächen des Umgebungslichtes umfassen, um die im Wesentlichen stabile Anzeige der Bildinformationen aufrechtzuerhalten.

13. Sucher nach Anspruch 1, wobei die Bildinformationen weiterhin mindestens eine steuerbare Betriebszustandsmitteilung (54) der Kamera umfassen, die in der Nähe eines Randes eines Feldes der Anzeige (53) angeordnet ist, wobei das Feld ein Bild zeigt, das durch die Kamera eingefangen wird.

14. Sucher nach Anspruch 1, wobei die Bildinformationen weiterhin mindestens eine steuerbare Betriebszustandsmitteilungsanzeige (54) der Kamera umfassen, die in der Nähe eines Randes der Flüssigkristallanzeige (53) angeordnet ist, wobei die Mitteilungsanzeige zur Beleuchtung durch die Beleuchtungsquelle und die Mittel zum Empfangen von Umgebungslicht verbunden ist.

15. Sucher nach Anspruch 13, wobei die Betriebszustandsmitteilung der Kamera mindestens entweder Stromversorgungskapazität, Belichtungszeit oder Aufzeichnungsdauer anzeigt.

16. Sucher (50) nach Anspruch 1, wobei die Beleuchtungsquelle der Flüssigkristallanzeige eine zusätzliche Lichtquelle (D1, D2) umfasst, die mit einem Regler (99) verbunden ist, der auf einen Sensor (S2) anspricht, der eine Lichtintensität in mindestens einer Farbe erfassen kann, von entweder dem Lichteinfall auf die Flüssigkristallanzeige oder Licht (LUM), das durch die Flüssigkristallanzeige bei Beleuchtung emittiert wird.

17. Sucher (50) nach Anspruch 1, wobei die Beleuchtungsquelle der Flüssigkristallanzeige eine zusätzliche Lichtquelle (D1, D2) umfasst, die mit einem Regler (99) verbunden ist, der auf einen Bildeinfangschaltkreis (200, 205) des Videokamerarecorders (10) anspricht, wobei der Bildeinfangschaltkreis (200, 205) die Beleuchtungsintensität von mindestens einem Ausschnitt einer Szene in mindestens einer Farbe erfasst und der Regler (99) die zusätzliche Lichtquelle (D1, D2) zur Aufrechterhaltung einer Intensität und einer Farbe der Flüssigkristallanzeige während Szenenbeleuchtungsveränderungen betreibt.

18. Sucher (50) nach Anspruch 1, weiterhin mindestens einen Sensor (S1, S2) umfassend, der auf eine Lichtintensität und einen Farbabgleich von mindestens entweder der Umgebungsbeleuchtung (A) oder Licht (LUM), das von der Anzeige emittiert wird, anspricht, wobei der Sensor (S1, S2) mit den Mitteln (99) verbunden ist, die mit der steuerbaren Beleuchtungsquelle (D1, D2) zum Verändern der Intensität (LUM) verbunden sind, und die steuerbare Quelle (D1, D2) zum Aufrechterhalten einer vorbestimmten Lichtintensität und eines vorbestimmten Farbabgleichs des von der Anzeige emittierten Lichts steuern kann.

19. Sucher (50) nach Anspruch 18, wobei die Mittel zum Erfassen (S2) der Lichtintensität mit einer vorbestimmten Fläche der Flüssigkristallanzeige (53) verbunden sind.

20. Sucher (50) nach Anspruch 1, wobei die Steuerungsmittel (99), die mit der Beleuchtungsquelle (D1, D2) verbunden sind, weiterhin ein steuerbares Dämpfungsglied (62, 63) zum Reduzieren einer Lichtintensität des Umgebungslichts (A) umfassen, das mit der Flüssigkristallanzeige verbunden ist.

## Revendications

1. Viseur (50) d'une caméra (10), comprenant :
un affichage à cristaux liquides (LCD) pour recevoir des informations d'image destinées à être affichées par le viseur (50) ;
un moyen pour recevoir un éclairement ambiant (A) couplé pour rétro-éclairer ledit affichage à cristaux liquides (LCD) afin d'afficher lesdites informations d'image, l'éclairement ambiant ayant un niveau variable ;
une source d'éclairement (D1, D2) couplée audit affichage à cristaux liquides (LCD) ; et
un moyen de commande (99) couplé à ladite source d'éclairement (D1, D2), le moyen de commande (99) faisant varier indépendamment l'intensité et l'équilibre des couleurs de la source (D1, D2) en cas de variation de l'éclairement ambiant.

2. Viseur selon la revendication 1, dans lequel le moyen pour recevoir l'éclairement ambiant (A) comprend un moyen d'obturation pour faire varier l'intensité de la lumière ambiante couplé audit affichage à cristaux liquides.

3. Viseur selon la revendication 1, dans lequel ladite source d'éclairement (D1, D2) comprend une diode électroluminescente.

4. Viseur selon la revendication 1, dans lequel ladite source d'éclairement comprend un tube fluorescent à cathode froide (CCFT).

5. Viseur selon la revendication 1, comprenant en outre un moyen de collimation (TBS) exploitable pour collimater l'éclairement provenant dudit moyen de réception d'éclairement ambiant, le moyen de collimation (TBS) couplant l'éclairement audit affichage à cristaux liquides (LCD), par lequel la lumière collimatée est dirigée dans un sens de visualisation.

6. Viseur selon la revendication 5, dans lequel ledit moyen de collimation (TBS) est exploitable pour collimater l'éclairement (SUP) provenant de la source (D1, D2), par lequel la lumière collimatée provenant de la source (D1, D2) est dirigée dans ledit sens de visualisation.

7. Viseur selon la revendication 1, comprenant en outre un moyen de détection d'éclairement (S1, S2, 200), couplé au moyen de commande (99), pour détecter au moins un éclairage émis par ledit affichage d'informations d'image et d'un éclairage à partir dudit moyen de réception d'éclairement ambiant frappant ledit affichage à cristaux liquides.

8. Viseur selon la revendication 7, dans lequel ledit moyen de détection d'éclairement (S1, S2, 200) répond à l'intensité lumineuse et à la température des couleurs.

9. Viseur selon la revendication 8, dans lequel ledit moyen de commande (99) est couplé pour faire varier la source (D1, D2) d'éclairement afin de maintenir un niveau d'éclairement prédéterminé émis par ledit affichage.

10. Viseur selon la revendication 9, dans lequel le moyen de détection d'éclairement (S1, S2, 200) répond à une température de couleur, dans lequel le moyen de commande (99) est exploitable pour faire varier une température de couleur de l'éclairement (LUM) émis par ledit affichage (LCD) en augmentant au moins un niveau de couleur dans la source (D1, D2) d'éclairement.

11. Viseur selon la revendication 10, comprenant en outre un moyen de collecte d'image (205) exploitable pour collecter des informations de couleurs concernant une scène, et dans lequel le moyen de détection d'éclairement comprend (200) ledit moyen de collecte d'image (205).

12. Viseur selon la revendication 1, dans lequel ledit moyen de réception d'éclairement ambiant (A) comprend en outre un moyen contrôlable (62, 63) pour atténuer l'éclairement ambiant afin de maintenir l'affichage desdites informations d'image substantiellement stable.

13. Viseur selon la revendication 1, dans lequel lesdites informations d'image comprennent en outre au moins un message d'état opérationnel de caméra contrôlable (54) disposé près d'un bord d'un champ de l'affichage (53), le champ montrant une image collectée par la caméra.

14. Viseur selon la revendication 1, dans lequel lesdites informations d'image comprennent en outre au moins un affichage de message d'état opérationnel de caméra contrôlable (54) disposé à côté d'un bord dudit affichage à cristaux liquides (53), ledit affichage de message étant couplé pour être éclairé par ladite source d'éclairement et ledit moyen de réception d'éclairement ambiant.

15. Viseur selon la revendication 13, dans lequel ledit message d'état opérationnel de caméra indique au moins l'un d'une capacité d'alimentation, d'un temps d'exposition et d'une durée d'enregistrement.

16. Viseur (50) selon la revendication 1, dans lequel la source d'éclairement de l'affichage à cristaux liquides comporte une source de lumière supplémentaire (D1, D2) couplée à un contrôleur (99) en réponse à un capteur (S2) exploitable pour détecter une intensité lumineuse dans au moins une couleur, de l'un de l'éclairement frappant l'affichage à cristaux liquides et de la lumière (LUM) émise par l'affichage à cristaux liquides tel qu'éclairé.

17. Viseur (50) selon la revendication 1, dans lequel la source d'éclairement de l'affichage à cristaux liquides comporte une source de lumière supplémentaire (D1, D2) couplée à un contrôleur (99) en réponse à un circuit de collecte d'image (200, 205) de l'enregistreur de caméra vidéo (10), le circuit de collecte d'image (200, 205) détectant l'intensité de l'éclairement d'au moins une partie d'une scène dans au moins une couleur, et le contrôleur (99) exploitant la source de lumière supplémentaire (D1, D2) pour maintenir une intensité et une couleur de l'affichage à cristaux liquides durant des variations de l'éclairement de la scène.

18. Viseur (50) selon la revendication 1, comprenant en outre au moins un capteur (S1, S2) sensible à une intensité lumineuse et un équilibre de couleurs d'au moins l'un dudit éclairement ambiant (A) et de ladite lumière (LUM) émise par l'affichage, le capteur (S1, S2) étant couplé au moyen (99) couplé à ladite source contrôlable d'éclairement (D1, D2) pour faire varier ladite intensité (LUM), et étant exploitable pour commander la source contrôlable (D1, D2) afin de maintenir une intensité lumineuse prédéterminée et un équilibre de couleurs prédéterminé de la lumière émise par l'affichage.

19. Viseur (50) selon la revendication 18, dans lequel ledit moyen de détection (S2) de ladite intensité lumineuse est couplé à une zone prédéterminée dudit affichage à cristaux liquides (53).

20. Viseur (50) selon la revendication 1, dans lequel ledit moyen de commande (99) couplé à ladite source (D1, D2) d'éclairement comprend en outre un atténuateur contrôlable (62, 63) pour réduire une intensité lumineuse de la lumière ambiante (A) couplé audit affichage à cristaux liquides.
